# EUROPÄISCHE PATENTSCHRIFT

(11) **EP 4 491 009 B1**
(45) Veröffentlichungstag und Bekanntmachung des Hinweises auf die Patenterteilung: **04.03.2026**
(21) Anmeldenummer: 24180488.9
(22) Anmeldetag: 06.06.2024
(51) Int. Cl.: A01F 15/07, A01F 15/08

(54) **ABLADEKIPPVORRICHTUNG UND BALLENPRESSE ODER WICKLER**
DISCHARGE TIPPING DEVICE AND BALER OR WINDER
DISPOSITIF DE BASCULEMENT DE DÉCHARGEMENT ET PRESSE À BALLES OU ENROULEUR

(30) Priorität: 26.06.2023 DE 102023116715
(43) Veröffentlichungstag der Anmeldung: 15.01.2025
(73) Patentinhaber: Deere & Company, Moline, IL 61265 (US)
(72) Erfinder: CHAPON, Emmanuel, 68163 Mannheim (DE); BLANCHON, Guillaume, 68163 Mannheim (DE)
(74) Vertreter: Stein, Stefan

(56) Entgegenhaltungen:
- EP-A1- 2 606 714
- EP-A1- 3 338 534
- EP-A1- 4 245 121

## Beschreibung

Die Erfindung betrifft eine Abladekippvorrichtung gemäss dem Oberbegriff des unabhängigen Anspruchs 1 und eine Ballenpresse oder einen Wickler gemäss dem Oberbegriff des unabhängigen Anspruchs 12.

In der Landwirtschaft wird Erntegut, insbesondere Gras und Stroh, mittels Ballenpressen zu Ballen gepresst, ggf. umwickelt und auf einem Feld abgelegt. Die Ballen werden in einem nachfolgenden Arbeitsvorgang auf einen Anhänger geladen und abtransportiert. Falls eine Rundballenpresse verwendet wird, ist die Symmetrieachse des Ballens üblicherweise horizontal und quer zur Fahrtrichtung der Ballenpresse orientiert, und der Ballen rollt nach hinten aus der Rundballenpresse bzw. einem Wickler heraus und bleibt letztlich auf seinem Umfang ruhend mit parallel zum Boden ausgerichteter Symmetrieachse auf dem Feld stehen. Bei bestimmten topografischen Bedingungen kann es sich als sinnvoll erweisen, den Ballen beim Auswerfen umzukippen, damit er auf seiner flachen Stirnfläche zum Liegen kommt und an Längs- oder Querhängen nicht wegrollen oder umfallen kann.

Es sind hierfür so genannte Abladekippvorrichtungen für Rundballen beschrieben worden, die Rampen für den auszuwerfenden Ballen umfassen, welche nach hinten und unten neigbar und zusätzlich zur Seite schwenkbar sind, um den Ballen auf seine Seite zu kippen (GB 2 305 648 A, EP 0 910 941 A1, EP 2 149 293 A1), jedoch zumindest einen zusätzlichen Aktuator für die Schwenkbewegung benötigen und somit relativ aufwändig sind.

Weniger aufwändig sind demgegenüber Abladekippvorrichtungen, die ein hinter der Ballenpresse oder dem Wickler gezogenes Fahrgestell mit einem auf dem Boden rollenden Rad und einer Fläche umfassen, welche den darauf rollenden Ballen zur Seite hin umkippt (US 4 162 135 A, DE 41 38 499 A1, EP 2 606 714 A1, EP 4 245 121 A1 - Stand der Technik nach Artikel 54 (3) EPÜ). Die EP 3 338 534 A1 offenbart eine Ballenpresse mit einer Abladekippvorrichtung mit einem Stützelement, mit welchem die Abladekippvorrichtung auf dem Boden abstützbar ist, eine Querstrebe, eine Längsstrebe und eine Diagonalstrebe umfasst.

Die Abladekippvorrichtungen sind um die Querachse frei schwenkbar mit der Ballenpresse bzw. dem Wickler gekoppelt, damit sie den Bodenkonturen folgen können und gemäß DE 41 38 499 A1 kann eine Aushebevorrichtung vorgesehen sein, um die Abladekippvorrichtung beim Wenden auf dem Feld oder bei Straßenfahrten vor Beschädigung zu schützen. Auch hier ist demnach ein zugeordneter Aktuator vorgesehen, um beispielsweise zu verhindern, dass die Abladekippvorrichtung beim Rückwärtsfahren in einer Furche steckenbleibt und beschädigt wird oder sogar die Ballenpresse oder den Wickler beschädigt.

Der vorliegenden Erfindung liegt daher die Aufgabe zugrunde eine Abladekippvorrichtung für Rundballen und eine Ballenpresse oder einen Wickler vorzuschlagen, durch welche die vorgenannten Probleme überwunden werden. Insbesondere werden eine Abladekippvorrichtung für Rundballen und eine Ballenpresse oder einen Wickler vorgeschlagen, die es ermöglichen den Rundballen in einer vorgegebene Richtung und/oder in einer vorgegebenen Position zu entladen und/oder eine Beschädigung der Abladekippvorrichtung zu verhindern oder eine Gefahr der Beschädigung zu verringern.

Diese Aufgabe wird durch eine Abladekippvorrichtung mit den Merkmalen des Anspruchs 1 und eine Ballenpresse oder einen Wickler mit den Merkmalen des Anspruchs 12 gelöst. Die abhängigen Ansprüche beziehen sich auf besonders vorteilhafte Ausführungsformen der Erfindung.

Erfindungsgemäss wird eine Abladekippvorrichtung, insbesondere für Rundballen, für eine Ballenpresse oder einen Wickler vorgeschlagen. Die Abladekippvorrichtung umfasst ein erstes Stützelement, mit welchem die Abladekippvorrichtung auf dem Boden abstützbar ist, eine Querstrebe, eine Längsstrebe, eine Diagonalstrebe und eine Trägerplatte. Das erste Stützelement ist mit der Trägerplatte verbunden, insbesondere lösbar oder fest befestigt. Die Trägerplatte ist mit der Längsstrebe verbunden, insbesondere lösbar oder fest befestigt. Die Längsstrebe und die Diagonalstrebe sind mit jeweils einem Ende mit der Querstrebe verbunden, insbesondere lösbar oder fest befestigt, und mit dem jeweils anderen Ende mit der Trägerplatte verbunden, insbesondere lösbar oder fest befestigt. Die Abladekippvorrichtung umfasst ein zweites Stützelement. Die Abladekippvorrichtung kann zusätzlich einen Abstandshalter umfassen. Das erste und zweite Stützelement sind als ein Rad ausgebildet. Unter verbunden, insbesondere lösbar oder fest befestigt, kann im folgende verstanden werden, dass die Bauteil mit Befestigungselementen, beispielsweise Schrauben und Muttern und/oder Zapfen und/oder Bolzen und/oder Nieten oder andere geeignete Befestigungselemente miteinander verbunden sind, und/oder beispielsweise miteinander verschweisst und/oder verzapft und/oder verklebt und/oder auf andere geeignete Art und Weise miteinander verbunden sind.

Die Abladekippvorrichtung kann schwenkbar mit einem Wickler für Rundballen oder einer Ballenpresse, insbesondere einer Rundballenpresse, verbindbar oder verbunden sein, bevorzugt an diesen anbringbar oder angebracht sein. Die Abladekippvorrichtung kann von der Ballenpresse oder dem Wickler über ein Feld ziehbar sein. Im Speziellen kann die Abladekippvorrichtung um eine horizontale, sich quer zu einer Vorwärtsrichtung erstreckende Achse des Wicklers oder der Ballenpresse schwenkbar sein.

Die Längsstrebe, die Diagonalstrebe und die Querstrebe können derart ausgestaltet und zueinander angeordnet sein, dass ein Rundballen zur Seite hin umgelenkt wird und mit seiner flachen Stirnseite auf dem Boden zu liegen kommt. Im Speziellen kann ein Rundballen aufgrund der Ausgestaltung und Anordnung der Längsstrebe, der Diagonalstrebe und der Querstrebe derart umlenkbar sein, sodass er mit seiner flachen Stirnseite auf dem Boden zu liegen kommt. Der Rundballen kann von einer Presskammer der Ballenpresse oder einer, bevorzugt mittels eines Aktuators, schwenkbaren Einrichtung des Wicklers, in oder auf welcher der Rundballen beim Pressen oder Wickeln liegt oder aufliegt, hinaus- oder hinabrollen. Dabei kann der Rundballen mit der Abladekippvorrichtung zur Seite hin umlenkbar sein. Mit anderen Worten, die Längsstrebe und die Diagonalstrebe sind derart mit jeweils einem Ende mit der Querstrebe und mit dem jeweils anderen Ende mit der Trägerplatte verbunden und/oder derart ausgestaltet, dass ein Rundballen zur Seite hin umgelenkt wird und mit seiner flachen Stirnseite auf dem Boden zu liegen kommt. Die Abladekippvorrichtung ist somit vorteilhafterweise zumindest teilweise als ein Umlenkmittel ausgebildet und kann einen Rundballen, der von der Ballenpresse oder dem Wickler hinabrollt, zur Seite hin umzulenken, sodass er mit seiner flachen Stirnseite auf dem Boden zu liegen kommt.

Die Diagonalstrebe kann sich von der Querstrebe zur Trägerplatte erstrecken. Im Speziellen kann sich die Diagonalstrebe von der Querstrebe schräg nach hinten und seitlich erstrecken. Die Diagonalstrebe kann unterhalb des rückwärtigen Bereichs der Längsstrebe mit der Trägerplatte verbunden sein. Die Trägerplatte kann sich vertikal und/oder entlang der Längsstrebe erstrecken. Die Trägerplatte kann sich aber auch zusätzlich oder alternativ in Vorwärtsrichtung V der Ballenpresse oder des Wicklers erstrecken. Ausserdem kann die Trägerplatte mit der Längsstrebe verbunden sein, bevorzugt mit der Längsstrebe lösbar oder fest verbunden sein, beispielsweise angeschraubt oder verschweisst oder auf andere geeignete Art und Weise an der Längsstrebe befestigt sein. Im Speziellen kann die Trägerplatte an der Unterseite der Längsstrebe angeordnet sein. Die Trägerplatte kann dreieckig sein. Ausserdem kann die Trägerplatte zur Gewichtsverminderung gelocht sein. Die Trägerplatte kann, insbesondere an ihrem rückwärtigen, unteren Ende, mit dem ersten Stützelement verbunden sein, insbesondere lösbar verbunden sein, durch welches sich die Ablagekippvorrichtung auf dem Erdboden abstützt. Im Speziellen kann dazu kann eine Achse des ersten Stützelements, eine erste Stützachse, mit der Trägerplatte verbunden sein, bevorzugt kann die erste Stützachse lösbar oder fest an der Trägerplatte befestigt sein. Die Trägerplatte kann, insbesondere an ihrem rückwärtigen, unteren Ende, die erste Stützachse lagern oder tragen.

Die erste Stützachse kann das erste Stützelement lagern und/oder mit diesem drehbar verbunden sein. Das erste und/oder zweite Stützelement können als Räder oder Kufen ausgebildet sein, mit welchen sich die Ablagekippvorrichtung auf dem Erdboden abstützt.

Wesentlich für die Erfindung ist, dass, wenn der Rundballen über die Abladekippvorrichtung nach hinten abrollt, um auf dem Feld abgelegt zu werden, durch das zweite Stützelement und/oder den Abstandshalter, bei eventuellen Rückwärtsfahrten zum Wenden auf einem Feld oder bei einer Transportfahrt bzw. beim Umsetzen der Ballenpresse oder des Wicklers auf einem Feld, verhindert wird, dass die Abladekippvorrichtung beschädigt wird. Während des Rangierens wird verhindert, dass die Abladekippvorrichtung den Boden und/oder ein Hindernis berührt, sodass diese nicht beschädigt wird. Die Abladekippvorrichtung kann also vorteilhafterweise mit dem zweiten Stützelement und/oder dem Abstandshalter, zusätzlich zum ersten Stützelement, zumindest zeitweise und/oder teilweise auf dem Boden und/oder gegen ein Hindernis oder den Boden abstützbar sein und so eine Beschädigung der Abladekippvorrichtung verhindern.

In Ausgestaltung der Erfindung ist das zweite Stützelement mit der Trägerplatte verbunden. Ebenso können das erste und zweite Stützelement mit der Trägerplatte verbunden sein. Das zweite Stützelement kann lösbar oder fest mit der Trägerplatte verbunden, besonders bevorzugt drehbar und lösbar oder drehbar und fest an der Trägerplatte befestigt sein. Es können aber auch das erste und zweite Stützelement lösbar oder fest mit der Trägerplatte verbunden sein, besonders bevorzugt drehbar und lösbar oder drehbar und fest an der Trägerplatte befestigt sein. Die Trägerplatte kann, insbesondere an ihrem rückwärtigen, unteren Ende, mit dem zweiten Stützelement verbunden sein, durch welches sich die Ablagekippvorrichtung zumindest zeitweise und/oder teilweise auf dem Erdboden abstützen kann. Im Speziellen kann dazu kann eine Achse des zweiten Stützelements, eine zweite Stützachse, mit der Trägerplatte verbunden sein, bevorzugt kann die zweite Stützachse lösbar oder fest an der Trägerplatte befestigt sein. Die Trägerplatte kann, insbesondere an ihrem rückwärtigen, unteren Ende, die zweiten Stützachse lagern oder tragen. Die zweite Stützachse kann das zweite Stützelement lagern und/oder mit diesem drehbar verbunden sein. Die erste und zweite Stützachse können parallel und/oder koaxial zueinander angeordnet sein, wenn das erste und zweite Stützelement mit der Trägerplatte verbunden sind. Dadurch könne die oben genannten Vorteile erreicht werden.

In Ausgestaltung der Erfindung ist der Abstandshalter mit der Trägerplatte verbunden, insbesondere an der Trägerplatte lösbar oder fest befestigt. Der Abstandshalter kann einteilig, also als ein einzelnes Bauteil, oder mehrteilig ausgebildet sein, also mehrere Bauteile umfassen. Der Abstandshalter kann beispielsweise als Stange oder Rohr und/oder Kufe ausgebildet sein. Der Abstandshalter kann U-förmig ausgebildet sein. Der Abstandhalter kann sich in Richtung der Trägerplatte erstrecken, insbesondere entlang der Trägerplatter erstrecken. Der Abstandhalter kann unterhalb der Trägerplatte angeordnet und befestigt sein. Mit dem Abstandshalter kann vorteilhafterweise beim Rückwärtsfahren oder Transportfahrt oder beim Umsetzen der Ballenpresse oder des Wicklers auf einem Feld verhindert werden, dass die Abladekippvorrichtung beschädigt wird. Während des Rangierens wird verhindert, dass die Abladekippvorrichtung den Boden und/oder ein Hindernis berührt, sodass diese nicht beschädigt wird. Die Abladekippvorrichtung kann also vorteilhafterweise mit dem Abstandshalter, zusätzlich zum ersten und/oder zweiten Stützelement, zumindest zeitweise und/oder teilweise auf dem Boden und/oder gegen ein Hindernis auf dem Boden abstützbar sein.

Als eine weitere vorteilhafte Massnahme ist der Abstandshalter mit dem ersten und/oder zweiten Stützelement verbunden, insbesondere lösbar oder fest am ersten und/oder zweiten Stützelement befestigt sein. Alternativ kann der Abstandshalter mit dem ersten und/oder zweiten Stützelement und der Trägerplatte verbunden sein, insbesondere lösbar oder fest am ersten und/oder zweiten Stützelement und der Trägerplatte befestigt sein.

In Ausgestaltung der Erfindung umfasst der Abstandshalter eine Kufe und/oder Gleitschiene oder kann insbesondere als Kufe oder Gleitschiene ausgebildet sein. Der Abstandhalter kann aber auch alternativ kufenförmig oder schienenförmig ausgebildet sein. Vorteilhafterweise kann dadurch ein Gleiten auf einem Hindernis oder dem Boden erreicht werden.

In Ausgestaltung der Erfindung umfasst der Abstandshalter ein Abstandselement. Ebenso kann der Abstandshalter eine erste und zweite Halterung umfassen. Ein erstes Ende des Abstandselement kann mit der ersten Halterung und ein zweites Ende des Abstandselement mit der zweiten Halterung verbunden sein, insbesondere lösbar oder fest verbunden sein, besonders bevorzugt lösbar oder fest an diesen befestigt sein. Ausserdem kann eine Abstandskufe mit dem Abstandselement verbunden sein, bevorzugt an lösbar oder fest verbunden sein, besonders bevorzugt lösbar oder fest befestigt sein. Die Abstandskufe kann beispielsweise als Kufe oder Gleitschiene ausgebildet sein. Die Abstandskufe kann sich entlang des Abstandselements erstrecken. Die erste und zweite Halterung können mit der Trägerplatte verbunden sein, bevorzugt mit dieser lösbar oder fest verbunden sein, besonders bevorzugt lösbar oder fest an dieser befestigt sein. Im Speziellen können die erste und zweite Halterung derart an der Trägerplatte angeordnet und mit dieser verbunden sein, dass sich das Abstandselement entlang der Trägerplatte erstreckt. Vorteilhafterweise kann das Abstandselement dadurch von der Abladekippvorrichtung auf einfache Art und Weise demontierbar oder ersetzbar sein.

In Ausgestaltung der Erfindung ist eine Abstandskufe oder eine Gleitschiene mit dem Abstandselement verbunden. Es kann aber auch das Abstandselement als Kufe oder Gleitschiene ausgebildet sein. Dadurch kann von Vorteil eine abgleiten erreicht und/oder ein Anstossen der Abladekippvorrichtung verhindert werden, wenn die Abladekippvorrichtung an ein Hindernis stösst.

Die Erfindung betrifft weiter eine Ballenpresse oder einen Wickler mit einer Abladekippvorrichtung, insbesondere einer Abladekippvorrichtung nach einem der Ansprüche 1 bis 11. Die Ballenpresse kann eine Rundballenpresse zum Bilden von Rundballen aus Erntegut sein. Die Ballenpresse kann einen Ballenpressenrahmen umfassen. Ebenso kann die Ballenpresse als Kombination mit einem Wickler ausgebildet sein. Die Ballenpresse kann durch Räder auf dem Erdboden abgestützt sein. Die Ballenpresse kann eine Aufnahmeeinheit, insbesondere eine Pick-up, zum Aufnehmen von Erntegut umfassen. Die Ballenpresse kann auch eine Presskammer umfassen. Die Presskammern kann eines oder mehrere Pressmitteln umfassen. Die Ballenpresse kann ausserdem eine Fördereinheit, beispielsweise einen Rotor oder ein Förderband, umfassen. Mit der Presskammer kann der Rundballen, insbesondere in einer Pressphase, geformt werden. Die Ballenpresse kann eine Wickeleinrichtung zum Umwickeln des fertig geformten Ballens mit einem Wickelmaterial, beispielsweise Netz, Folie oder Bindegarn, umfassen. Der fertig geformte Rundballen kann in der Presskammer von der Wickeleinrichtung mit dem Wickelmaterial umwickelt werden. Die Ballenpresse kann eine Auswurfeinheit, beispielsweise eine Auswurfklappe oder ein Heckteil oder eine Heckklappe der Ballenpresse, umfassen. Der fertig geformte Rundballen oder der fertig umwickelte Rundballen kann über die Auswurfeinheit der Ballenpresse, insbesondere über die mit der Auswurfeinheit versehene Presskammer, entladen oder ausgeworfen werden. Der Rundballen kann aus der Presskammer der Ballenpresse hinausrollen und mit der Abladekippvorrichtung zur Seite hin umlenkbar sein. Die Ballenpresse kann mit einer größenveränderlichen Presskammer bzw. als Ballenpresse mit variabler Presskammer ausgebildet sein. Die Ballenpresse mit größenveränderlichen Presskammer kann eines oder mehrere Pressmittel umfassen, wobei das Pressmittel insbesondere als Riemen oder Gurt oder Kettenanordnung oder Band ausgebildet sein kann. Ebenso kann die Ballenpresse auch eine größenunveränderliche Presskammer umfassen. Hierbei kann ein Pressmittel als Pressrolle ausgebildet sein, insbesondere eine Vielzahl zueinander parallel verlaufender Pressrollen zum Pressen des Ernteguts. Die Rotationsachsen der Pressrollen können bei geschlossener Auswurfeinheit auf einem Kreisbogen liegen und wenigstens eine der Pressrollen kann angetrieben sein. Die Anordnung der Pressrollen in der Presskammer kann einer Zylinderform entsprechen, sodass die Pressrollen zylindrisch um den Rundballen angeordnet sind und eine zylindrische Umfangsfläche ausbilden. Die Presskammer kann am Ballenpressenrahmen angeordnet, bevorzugt mit diesem verbunden und/oder an diesem befestigt sein. Die Aufnahmeeinheit zur Aufnahme oder zum Sammeln von Erntegut, das auf einem Feld liegt oder steht, und/oder zum Befördern des Ernteguts in die Presskammer kann ebenfalls am Ballenpressenrahmen angeordnet, bevorzugt mit diesem verbunden und/oder an diesem befestigt sein.

Der Wickler kann zum Wickeln des Ballens ausserhalb der Ballenpresse, insbesondere ausserhalb der Presskammer ausgebildet sein. Der Wickler kann einen Wicklerrahmen umfassen. Der Wickler kann durch Räder auf dem Erdboden abgestützt sein. Der Wickler kann eine Wickeleinrichtung zum Umwickeln des fertig geformten Ballens mit einem Wickelmaterial, beispielsweise Netz oder Folie umfassen. Die Wickeleinrichtung kann zwei Wickelarme umfassen. Der fertig geformte Rundballen kann also ausserhalb der Presskammer mit dem Wickler von der Wickeleinrichtung mit Wickelmaterial umwickelt werden. Der Wickler kann eine schwenkbare Einrichtung umfassen, beispielsweise eine Wickeltisch oder Plattform, auf welcher der Rundballen gelagert wird. Die schwenkbare Einrichtung kann mittels eines Aktuators, beispielsweise in Form eines Hydraulikzylinders oder Pneumatikzylinders oder Hebekissens oder Gewindetriebs oder Zahnstangentriebs oder Elektrozylinders oder Motors oder Schrittmotors, schwenkbar sein. Die schwenkbare Einrichtung kann mit dem Aktuator zwischen einer horizontalen Position und einer nach hinten geneigten Position schwenkbar sein. In der horizontalen Position liegt der Rundballen während des Wickelns auf der Einrichtung auf und durch den Aktuator wird die Einrichtung nach hinten gekippt, um den Rundballen nach mit der Abladekippvorrichtung abrollen zu lassen und auf dem Feld abzulegen. Der Rundballen kann von der schwenkbaren Einrichtung des Wicklers, in oder auf welcher der Rundballen beim Wickeln liegt oder aufliegt, hinaus- oder hinabrollen. Dabei kann der Rundballen mit der Abladekippvorrichtung zur Seite hin umlenkbar sein.

Die Abladekippvorrichtung kann um eine sich quer zu einer Vorwärtsrichtung (V) erstreckende Achse, also eine Schwenkachse, schwenkbar mit der Ballenpresse, insbesondere mit einem Rahmen der Ballenpresse, oder mit dem Wickler, insbesondere mit einem Rahmen des Wicklers bzw. einem Wicklerrahmen oder der schwenkbaren Einrichtung des Wicklers, verbunden sein, bevorzugt lösbar oder fest befestigt und schwenkbar verbunden bzw. befestigt sein. Im Speziellen kann die Querstrebe der Abladekippvorrichtung, insbesondere an ihren beiden seitlichen Enden, entlang oder in Richtung der Schwenkachse und um die Schwenkachse drehbar oder schwenkbar mit der Ballenpresse oder dem Wickler verbunden sein, bevorzugt angelenkt sein, besonders bevorzugt am Rahmen der Ballenpresse oder am Rahmen des Wicklers oder an der schwenkbaren Einrichtung verbunden oder angelenkt sein. Die Schwenkachse kann eine horizontale, sich quer zu einer Vorwärtsrichtung (V) erstreckende Achse sein. Die Abladekippvorrichtung kann von der Ballenpresse der dem Wickler über ein Feld ziehbar sein.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:
- Fig. 1: eine schematische Darstellung einer Kombination aus einer Ballenpresse und einem erfindungsgemässen Wickler mit einem ersten Ausführungsbeispiel einer erfindungsgemässen Abladekippvorrichtung,
- Fig. 2: eine schematische perspektivische Ansicht eines erfindungsgemässen Wicklers mit einem zweiten Ausführungsbeispiel einer erfindungsgemässen Abladekippvorrichtung,
- Fig. 3: eine schematische Darstellung des zweiten Ausführungsbeispiels der Abladekippvorrichtung,
- Fig. 4: eine perspektivische Ansicht eines erfindungsgemässen Wicklers mit einem dritten Ausführungsbeispiel einer erfindungsgemässen Abladekippvorrichtung,
- Fig. 5: eine schematische Darstellung des dritten Ausführungsbeispiels der Abladekippvorrichtung,
- Fig. 6: eine schematische detaillierte Darstellung des zweiten Ausführungsbeispiels der Abladekippvorrichtung,
- Fig. 7: eine schematische detaillierte Darstellung des dritten Ausführungsbeispiels der Abladekippvorrichtung,

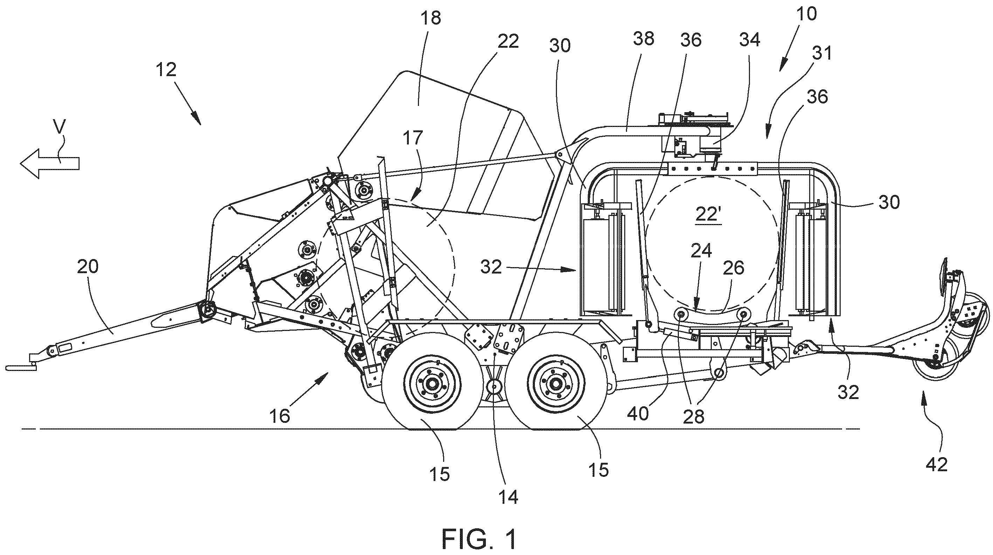

Figur 1 zeigt eine schematische Darstellung einer Kombination 12 aus einer Ballenpresse 16 und einem erfindungsgemässen Wickler 10 mit einem ersten Ausführungsbeispiel einer erfindungsgemässen Abladekippvorrichtung 42. Die Ballenpresse 16 dient zum Pressen von organischem Material, das von einem Feld aufgenommen wird, zu einem Rundballen und der Wickler 10 zum Umwickeln des Rundballens mit Folie oder einem anderen Wickelmaterial. Die Kombination 12 baut sich auf einem Rahmen 14 auf, der sich auf Rädern 15 auf dem Erdboden abstützt. Die Ballenpresse 16 umfasst eine rückwärtige Tür 18. Die Kombination 12 wird im Betrieb durch eine Deichsel 20 hinter einem nicht gezeigten Zugfahrzeug (Ackerschlepper) in einer Vorwärtsrichtung V über ein Feld gezogen. Die Kombination 12 wird in der EP 1 186 225 A1 im Einzelnen beschrieben.

Es sei angemerkt, dass anstelle der in Figur 1 gezeigten Kombination 12 auch eine Ballenpresse 16 oder ein Wickler 10 unabhängig voneinander mit der Abladekippvorrichtung 42 verwendet werden könnten, die mit zugeordneten Zugfahrzeugen über ein Feld bewegt werden. Auch könnten die Kombination 12 oder die Ballenpresse 16 und/oder der Wickler 10 selbstfahrend sein.

Die Ballenpresse 16 kann eine Aufnahmeeinheit (nicht dargestellt) zur Aufnahme von Erntegut und eine Presskammer 17, um das aufgenommene Erntegut zu einem Rundballen zu formen bzw. zu pressen. Die Presskammer 17 kann am oder auf dem Rahmen 14 der Ballenpresse 16 angeordnet, bevorzugt mit diesem verbunden und/oder an diesem befestigt und/oder getragen sein. Der Wickler 10 kann zum Wickeln des Rundballens 22' ausserhalb der Ballenpresse 16, insbesondere der ausserhalb der Presskammer 17 ausgebildet sein.

Der Wickler 10 umfasst eine Wickeleinrichtung 31 zum Umwickeln des fertig geformten Ballens mit einem Wickelmaterial, beispielsweise Netz oder Folie. Der Wickler 10 kann einen Wicklerrahmen, vorliegend als Trägerrahmen 38 ausgebildet, umfassen. Der Wickler 10 umfasst eine schwenkbare Einrichtung 24, die vorliegend als ein Wickeltisch ausgebildet ist, auf welcher der Rundballen gelagert wird. Die schwenkbare Einrichtung 24 kann mittels eines Aktuators 40 schwenkbar sein. Die Wickeleinrichtung 31 kann zwei Wickelarme 30 umfassen. Der fertig geformte Rundballen 22 kann also ausserhalb der Presskammer 17 mit dem Wickler 10 von der Wickeleinrichtung 31 mit Wickelmaterial umwickelt werden. Der umwickelte Rundballen 22' kann von der schwenkbaren Einrichtung 24 des Wicklers 10, in oder auf welcher der Rundballen beim Wickeln liegt oder aufliegt, hinaus- oder hinabrollen. Dabei kann der umwickelte Rundballen 22' mit der Abladekippvorrichtung 42 zur Seite hin umlenkbar sein.

Ein in der Ballenpresse 16 erzeugter Rundballen 22 kann mit der schwenkbaren Einrichtung 24 des Wicklers 10 aus der Ballenpresse 16 in eine Wickelposition im Wickler 10 verbracht werden. Während des Wickelbetriebs liegt somit ein zu umwickelnder Rundballen 22' auf der Einrichtung 24, die einen Riemen 26 umfasst, der um zwei an einem Gestell 66 befestigte Walzen 28 umläuft. Oberhalb der Einrichtung 24 umlaufen die zwei sich diametral gegenüber liegende Wickelarme 30 mit zueinander senkrechten, vertikalen und horizontalen Abschnitten den Rundballen 22'. Jeder vertikale Abschnitt der Wickelarme 30 haltert einen Folienspender 32. Die mittleren Enden der horizontalen Abschnitte der Wickelarme 30 sind mit einer Antriebsanordnung 34 verbunden, die eingerichtet sind, die Wickelarme 30 um eine mittige, vertikale Achse zu drehen. Die Antriebsanordnung 34 ist durch einen Wicklerrahmen, vorliegend als Trägerrahmen 38 ausgebildet, mit dem Rahmen 14 verbunden und umfasst einen hydraulischen Motor, der mit dem hydraulischen System des Zugfahrzeugs verbunden ist. Während des Wickelbetriebes treibt die Antriebsanordnung 34 oder ein separater Hydraulikmotor auch die Walzen 28 an, sodass sich der Rundballen 22' um seine horizontale Mittelachse dreht, während sich die Wickelarme 30 um den Rundballen 22' drehen und Folie von den Folienspendern 32 abgewickelt und um den Rundballen 22' gewickelt wird. Folienhalter 36 drücken die Folie während des Starts des Wickelbetriebs gegen den Rundballen 22' und schneiden sie nach dem Wickeln ab. Die Geschwindigkeiten der Wickelarme 30 und der Walzen 28 können synchronisiert sein, um eine gewünschte Positionierung der Folie auf dem Rundballen 22' zu erreichen.

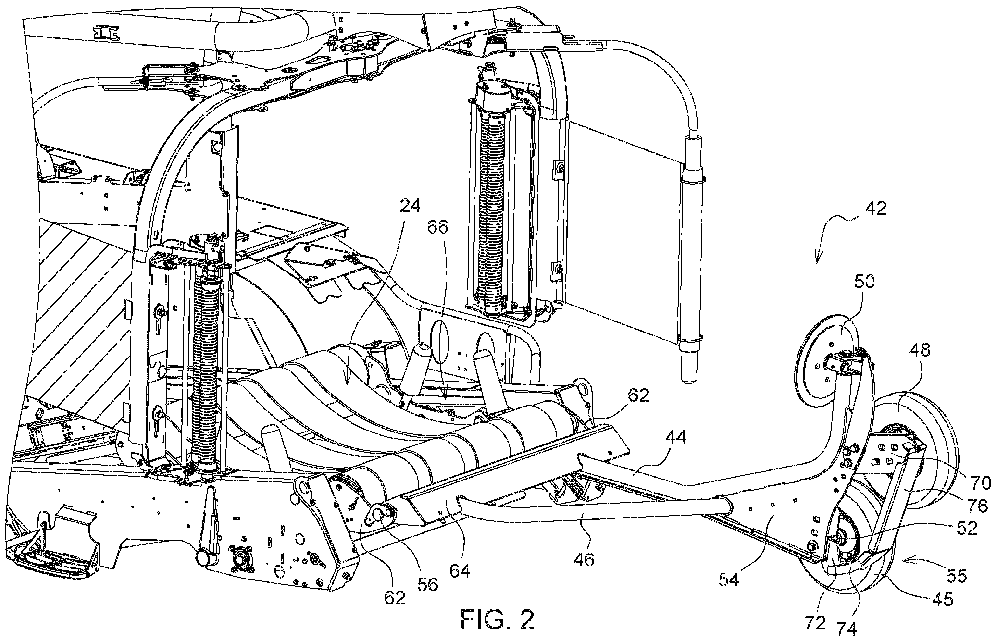

Zum Ablegen des fertiggestellten Ballens 22' auf einem Feld ist das Gestell 66 (siehe Figur 2) der Einrichtung 24 mittels des Aktuators 40, insbesondere um eine sich horizontal und quer zur Vorwärtsrichtung V erstreckende Achse, schwenkbar, insbesondere nach hinten und unten schwenkbar. Bei einer anderen, nicht gezeigten Ausführungsform ist der Aktuator 40 als Motor (der mit der Einrichtung 24 beispielsweise durch Ritze und eine Kette oder einen Riemen verbunden sein kann) ausgeführt, der auch zum Transport der beweglichen Einrichtung 24 aus einer vorderen Position zur Übernahme des Ballens 22 von der Ballenpresse 16 in die in Figur 1 gezeigte Wickelposition im Wickler 10 dient und auch die Kippbewegung bewerkstelligt. Einzelheiten hierzu sind in der EP 1 186 225 A1 offenbart.

Um zu erreichen, dass der Rundballen 22' nicht auf seinem Umfang auf dem Feld zu liegen kommt und bei ungünstigen topografischen Bedingungen wegrollen oder umfallen kann, ist die Abladekippvorrichtung 42 vorgesehen.

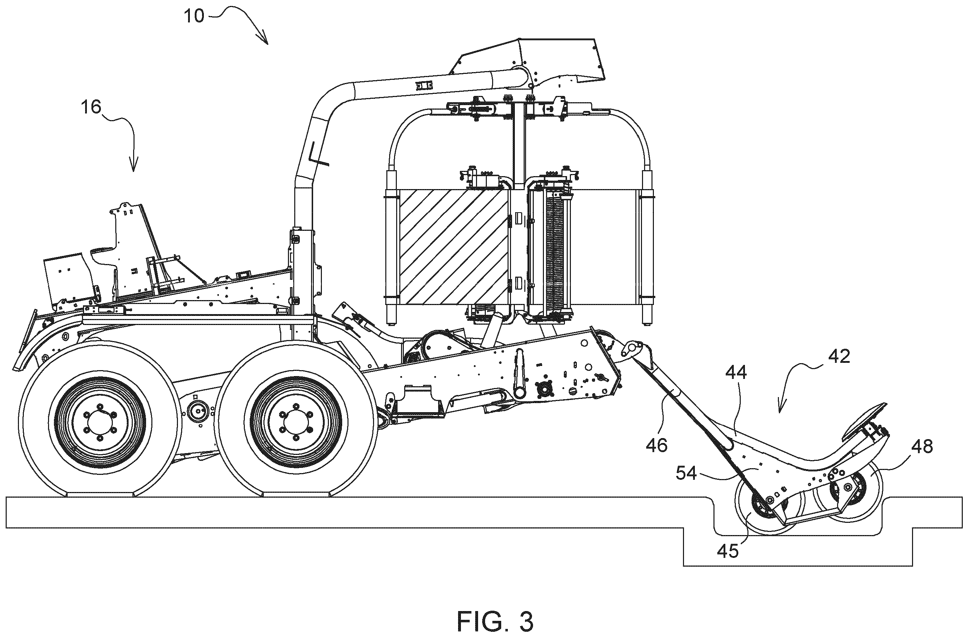

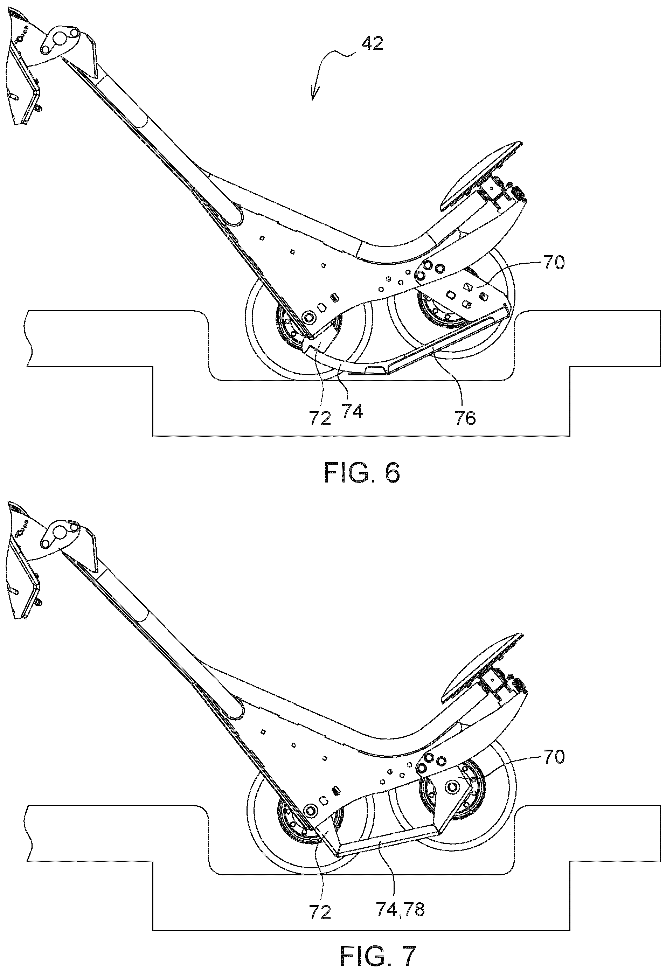

Figur 2 zeigt eine schematische perspektivische Ansicht eines erfindungsgemässen Wicklers 10 mit einem zweiten Ausführungsbeispiel einer erfindungsgemässen Abladekippvorrichtung 42. Figur 3 zeigt eine schematische Darstellung des zweiten Ausführungsbeispiels der Abladekippvorrichtung 42. Figur 6 zeigt eine schematische detaillierte Darstellung des zweiten Ausführungsbeispiels der Abladekippvorrichtung 42. Die in den Figuren 2, 3 und 6 gezeigte Abladekippvorrichtung 42 und der Wickler 10 entsprechen im Wesentlichen der in Figur 1 gezeigten Abladekippvorrichtung 42 und dem in Figur 1 gezeigten Wickler 10, sodass im Folgenden lediglich auf Details und/oder Unterschiede eingegangen wird. Die in Figur 1 gezeigte Kombination 12 kann die in den Figuren 2, 3 und 6 gezeigte Abladekippvorrichtung 42 und/oder den gezeigten Wickler 10 umfassen. Im Folgenden wird das zweite Ausführungsbeispiel anhand der Figuren 2, 3 und 6 beschrieben.

Die Abladekippvorrichtung 42 umfasst ein erstes Stützelement 45, mit welchem die Abladekippvorrichtung 42 auf dem Boden abstützbar ist. Ausserdem umfasst die Abladekippvorrichtung 42 eine Querstrebe 64, eine Längsstrebe 44, eine Diagonalstrebe 46 und eine Trägerplatte 54, wobei das erste Stützelement 45 mit der Trägerplatte 54 und die Trägerplatte 54 mit der Längsstrebe 44 verbunden ist. Die Längsstrebe 44 und die Diagonalstrebe 46 sind mit jeweils einem Ende mit der Querstrebe 64 und mit dem jeweils anderen Ende mit der Trägerplatte 54 verbunden. Die Abladekippvorrichtung 42 umfasst ausserdem ein zweites Stützelement 48 und/oder einen Abstandshalter 55. Die

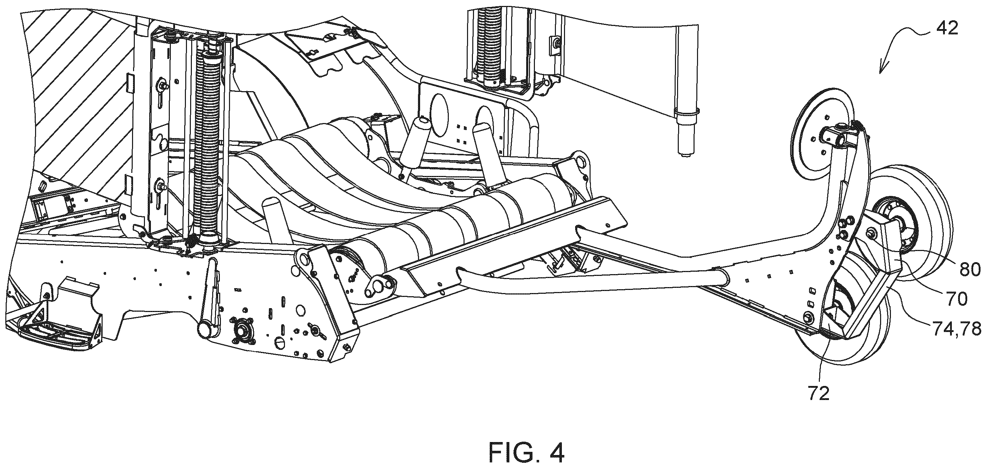

Die Längsstrebe 44 ist bei der dargestellten Ausführungsform als Rohr ausgeführt und erstreckt sich von der Querstrebe 64 nach hinten. Die Längsstrebe 44 umfasst mehrere Abschnitte, die zueinander jeweils Winkel einschließen und insgesamt etwa ein liegendes "L" mit einem abgerundeten Mittelabschnitt bilden. Die Querstrebe 64 ist ihrerseits an ihren beiden seitlichen Enden durch Achsen 56 drehbar an Abschnitten 62 des Gestells 66 der Einrichtung 24 angelenkt, die sich gabelförmig nach hinten erstrecken und die Querstrebe 64 zwischen sich aufnehmen. Die schräg angeordnete Diagonalstrebe 46 erstreckt sich von der Querstrebe 64 schräg nach hinten und seitlich und ist unterhalb des rückwärtigen Bereichs der Längsstrebe 44 mit einer sich vertikal und Vorwärtsrichtung V erstreckenden Trägerplatte 54 verbunden, die ihrerseits an der Unterseite der Längsstrebe 44 angebracht ist. Am rückwärtigen, unteren Ende der Trägerplatte 54 ist eine erste Stützachse 52, welche das erste Stützelement 45 in Form eines gummibereiften Rades haltert, mit der Trägerplatte 54 verbunden bzw. an dieser befestigt. Ausserdem kann eine zweite Stützachse 80 (siehe Figur 4), welche das zweite Stützelement 48 in Form eines gummibereiften Rades haltert, mit der Trägerplatte 54 und/oder einem Abstandshalter 55 verbunden bzw. an diesen befestigt sein.

Die Längsstrebe 44 trägt an ihrem rückwärtigen, oberen Ende einen Anschlag, vorliegend in Form einer Scheibe 50 ausgebildet, der vorzugsweise um die Hochachse frei drehbar an der Längsstrebe 44 angebracht ist. Die Längsstrebe 44 ist gegenüber der Längsmittelebene der Kombination 12 seitlich versetzt an der Querstrebe 64 angebracht. Die Diagonalstrebe 46 ist etwas so weit vom ihr benachbarten Abschnitt 62 beabstandet ist wie die Längsstrebe 44 von ihrem benachbarten Abschnitt 62.

Der Abstandshalter 55 ist mit der Trägerplatte 54 verbunden, insbesondere lösbar oder fest an dieser befestigt. Das zweite Stützelement 48 ist mit dem Abstandshalter 55 verbunden oder befestigt, insbesondere kann das zweite Stützelement 48 drehbar am Abstandshalter 55 befestigt und/oder gelagert sein. Im Speziellen ist die zweite Stützachse (nicht gezeigt), welche das zweite Stützelement 48 in Form eines gummibereiften Rades haltert, mit dem Abstandshalter 55 verbunden bzw. an diesen befestigt sein. Der Abstandshalter 55 kann aber auch mit dem ersten und zweiten Stützelement 45, 48 verbunden sein, insbesondere das erste und zweite Stützelement 45, 48 am Abstandshalter 55 befestigt sein. Der Abstandshalter 55 umfasst ein Abstandselement 74 und eine erste und zweite Halterung 70, 72. Ein erstes Ende des Abstandselements 74 ist mit der ersten Halterung 70 und ein zweites Ende des Abstandselements 74 mit der zweiten Halterung 72 verbunden, insbesondere an diesen lösbar oder fest befestigt. Ausserdem ist eine Abstandskufe 76, die als Kufe bzw. Gleitschiene ausgebildet ist, mit dem Abstandselement 74 verbunden, insbesondere am Abstandselement 74 befestigt. Der Abstandshalter 55, insbesondere auch das Abstandselement 74, erstrecken sich in Richtung oder entlang der Trägerplatte 54.

Wie anhand der Figuren 1 bis 7 erkennbar ist, wird ein von der nach hinten und unten abgekippten Einrichtung 24 abrollender Rundballen 22' auf der Längsstrebe 44 und der Diagonalstrebe 46 abrollen und durch diese zur Seite hin abgelenkt, sodass er mit seiner flachen Seite auf dem Feld zum Liegen kommt. Die erwähnten Komponenten bilden einzeln oder gemeinsam Umlenkmittel, die konfiguriert sind, einen Rundballen 22 zur Seite hin umzulenken, sodass er mit seiner flachen Stirnseite auf dem Boden zu liegen kommt. Um auf möglichst wenig aufwändige Weise zu erreichen, dass die Abladekippvorrichtung 42 bei Rangiervorgängen, insbesondere eventuellen Wendevorgängen oder Rückwärtsfahrten auf einem Feld, sich nicht an Bodenwellen, Furchen oder anderen Hindernissen verhakt und letztlich gegen den Wicklerrahmen oder den Rahmen 14 stößt und selbst beschädigt wird oder den Wickler 10 oder die Ballenpresse 16 beschädigt, sind das zweite Stützelement 48 und/oder der Abstandshalter 55 vorgesehen.

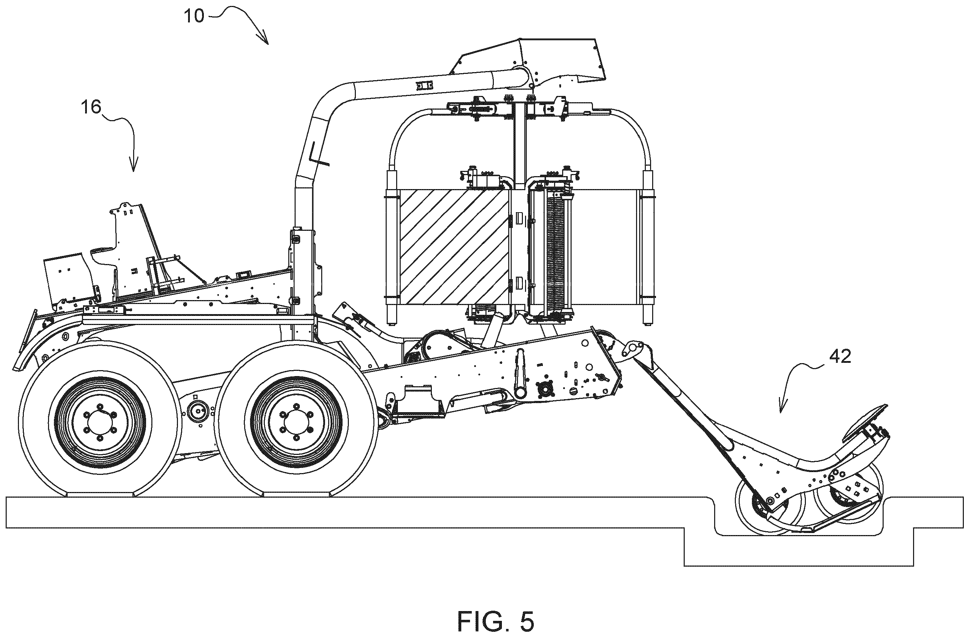

Figur 4 zeigt eine perspektivische Ansicht eines erfindungsgemässen Wicklers 10 mit einem dritten Ausführungsbeispiel einer erfindungsgemässen Abladekippvorrichtung 42. Figur 5 zeigt eine schematische Darstellung des dritten Ausführungsbeispiels der Abladekippvorrichtung 42. Figur 7 zeigt eine schematische detaillierte Darstellung des dritten Ausführungsbeispiels der Abladekippvorrichtung 42. Die in den Figuren 4, 5 und 7 gezeigte Abladekippvorrichtung 42 und der Wickler 10 entsprechen im Wesentlichen den in den Figuren 1 bis 3 und 6 gezeigten Abladekippvorrichtungen 42 und den gezeigten Wicklern 10, sodass im Folgenden lediglich auf Details und/oder Unterschiede eingegangen wird. Die in Figur 1 gezeigte Kombination 12 kann die in den Figuren 4, 5 und 7 gezeigte Abladekippvorrichtung 42 und/oder den gezeigten Wickler 10 umfassen. Im Folgenden wird das dritte Ausführungsbeispiel anhand der Figuren 4, 5 und 7 beschrieben.

Der Abstandshalter 55 umfasst eine Kufe und/oder Gleitschiene, und kann insbesondere alternativ als Kufe oder Gleitschiene ausgebildet sein. Der Abstandshalter 55 umfasst ein Abstandselement 74, das als Kufe 78 ausgebildet ist. Das Abstandselement 74 kann aber alternativ auch als Gleitschiene ausgebildet sein. Der Abstandshalter 55, insbesondere das Abstandselement 74 bzw. die Kufe 78, erstrecken sich entlang oder in Richtung der Trägerplatte 54. Der Abstandshalter 55 umfasst die erste und zweite Halterungen 70, 72, wobei ein erstes Ende des Abstandselements 74 bzw. der Kufe 78 mit der ersten Halterung 70 und ein zweites Ende des Abstandselements 74 mit der zweiten Halterung 72 verbunden ist.

Es sei noch angemerkt, dass bei der gezeigten Ausführungsform der Rundballen 22' durch den Wickler 10 abgelegt wird. Der Wickler 10 kann auch als einzelne Maschine ausgeführt werden, die unabhängig von der Ballenpresse 16 über ein Feld bewegt wird. Man könnte auch eine Ballenpresse 16, deren Ballenpressraum auch zum Umwickeln des Ballens 22 dient (s. WO 00/15023 A1), mit einer erfindungsgemäßen Abladekippvorrichtung 42 versehen.

## Patentansprüche

1. Abladekippvorrichtung für eine Ballenpresse (16) oder einen Wickler (10), wobei die Abladekippvorrichtung (42) ein erstes Stützelement (45), mit welchem die Abladekippvorrichtung (42) auf dem Boden abstützbar ist, und ein zweites Stützelement (48), eine Querstrebe (64), eine Längsstrebe (44) und eine Diagonalstrebe (46) umfasst, und die Längsstrebe (44) und die Diagonalstrebe (46) mit jeweils einem Ende mit der Querstrebe (64) verbunden sind, **dadurch gekennzeichnet, dass** die Abladekippvorrichtung (42) eine Trägerplatte (54) umfasst, wobei das erste Stützelement (45) mit der Trägerplatte (54) verbunden ist, und die Längsstrebe (44) und die Diagonalstrebe (46) mit dem jeweils anderen Ende mit der Trägerplatte (54) verbunden sind, und das erste und zweite Stützelement (45, 48) als ein Rad ausgebildet sind.

2. Abladekippvorrichtung nach Anspruch 1, **dadurch gekennzeichnet, dass** die Abladekippvorrichtung (42) einen Abstandshalter (55) umfasst.

3. Abladekippvorrichtung nach Anspruch 1 oder 2, **dadurch gekennzeichnet, dass** das zweite Stützelement (48) mit der Trägerplatte (54) verbunden ist oder das erste und zweite Stützelement (45, 48) mit der Trägerplatte (54) verbunden sind.

4. Abladekippvorrichtung nach einem der Ansprüche 1 bis 3, **dadurch gekennzeichnet, dass** der Abstandshalter (55) mit der Trägerplatte (54) verbunden ist.

5. Abladekippvorrichtung nach einem der vorangehenden Ansprüche 1 bis 4, **dadurch gekennzeichnet, dass** der Abstandshalter (55) mit dem ersten und/oder zweiten Stützelement (45, 48) verbunden ist.

6. Abladekippvorrichtung nach einem der vorangehenden Ansprüche 1 bis 5, **dadurch gekennzeichnet, dass** der Abstandshalter (55) eine Kufe und/oder Gleitschiene umfasst, insbesondere als Kufe oder Gleitschiene ausgebildet ist.

7. Abladekippvorrichtung nach einem der vorangehenden Ansprüche 1 bis 6, **dadurch gekennzeichnet, dass** der Abstandshalter (55) ein Abstandselement (74) umfasst.

8. Abladekippvorrichtung nach einem der vorangehenden Ansprüche 1 bis 7, **dadurch gekennzeichnet, dass** der Abstandshalter (55) eine erste und zweite Halterung (70, 72) umfasst.

9. Abladekippvorrichtung nach Anspruch 8, **dadurch gekennzeichnet, dass** ein erstes Ende des Abstandselements (74) mit der ersten Halterung (70) und ein zweites Ende des Abstandselements (74) mit der zweiten Halterung (72) verbunden ist.

10. Abladekippvorrichtung nach einem der vorangehenden Ansprüche 7 bis 9, **dadurch gekennzeichnet, dass** mit dem Abstandselement (74) eine Abstandskufe (76) verbunden ist.

11. Abladekippvorrichtung nach einem der vorangehenden Ansprüche 7 bis 10, **dadurch gekennzeichnet, dass** das Abstandselement (74) als Kufe (78) oder Gleitschiene ausgebildet ist.

12. Ballenpresse oder Wickler mit einer Abladekippvorrichtung (42) nach einem der Ansprüche 1 bis 11.

13. Ballenpresse oder Wickler nach Anspruch 12, **dadurch gekennzeichnet, dass** die Abladekippvorrichtung (42) um eine quer zu einer Vorwärtsrichtung (V) erstreckende Achse (56) schwenkbar mit der Ballenpresse (16) oder dem Wickler (10) verbunden ist.

14. Ballenpresse oder Wickler nach Anspruch 12 oder 13, **dadurch gekennzeichnet, dass** die Ballenpresse (16) oder der Wickler (10) konfiguriert sind, dass der Rundballen (20, 22') von einer Presskammer (17) der Ballenpresse (16) oder von einer schwenkbaren Einrichtung (24) des Wicklers (10) zur Abladekippvorrichtung (42) rollt.

## Claims

1. Unloading tipping apparatus for a baler (16) or a wrapper (10), wherein the unloading tipping apparatus (42) comprises a first supporting element (45), with which the unloading tipping apparatus (42) can be supported on the ground, and a second supporting element (48), a transverse strut (64), a longitudinal strut (44) and a diagonal strut (46), and the longitudinal strut (44) and the diagonal strut (46) are connected, at one respective end, to the transverse strut (64), **characterized in that** the unloading tipping apparatus (42) comprises a carrier plate (54), wherein the first supporting element (45) is connected to the carrier plate (54), and the longitudinal strut (44) and the diagonal strut (46) are connected, at the other respective end, to the carrier plate (54), and the first and second supporting elements (45, 48) are in the form of a wheel.

2. Unloading tipping apparatus according to Claim 1, **characterized in that** the unloading tipping apparatus (42) comprises a spacer (55).

3. Unloading tipping apparatus according to Claim 1 or 2, **characterized in that** the second supporting element (48) is connected to the carrier plate (54) or the first and second supporting elements (45, 48) are connected to the carrier plate (54).

4. Unloading tipping apparatus according to one of Claims 1 to 3, **characterized in that** the spacer (55) is connected to the carrier plate (54).

5. Unloading tipping apparatus according to one of preceding Claims 1 to 4, **characterized in that** the spacer (55) is connected to the first and/or second supporting element (45, 48).

6. Unloading tipping apparatus according to one of preceding Claims 1 to 5, **characterized in that** the spacer (55) comprises a runner and/or sliding rail, in particular is in the form of a runner or sliding rail.

7. Unloading tipping apparatus according to one of preceding Claims 1 to 6, **characterized in that** the spacer (55) comprises a spacer element (74).

8. Unloading tipping apparatus according to one of preceding Claims 1 to 7, **characterized in that** the spacer (55) comprises a first and second holder (70, 72).

9. Unloading tipping apparatus according to Claim 8, **characterized in that** a first end of the spacer element (74) is connected to the first holder (70) and a second end of the spacer element (74) is connected to the second holder (72).

10. Unloading tipping apparatus according to one of preceding Claims 7 to 9, **characterized in that** a spacer runner (76) is connected to the spacer element (74).

11. Unloading tipping apparatus according to one of preceding Claims 7 to 10, **characterized in that** the spacer element (74) is in the form of a runner (78) or sliding rail.

12. Baler or wrapper having an unloading tipping apparatus (42) according to one of Claims 1 to 11.

13. Baler or wrapper according to Claim 12, **characterized in that** the unloading tipping apparatus (42) is connected to the baler (16) or to the wrapper (10) so as to be able to pivot about a pin (56) that extends transversely to a forward direction (V).

14. Baler or wrapper according to Claim 12 or 13, **characterized in that** the baler (16) or the wrapper (10) is configured so that the round bale (20, 22') rolls from a baling chamber (17) of the baler (16) or from a pivotable device (24) of the wrapper (10) to the unloading tipping apparatus (42).

## Revendications

1. Dispositif de basculement de déchargement pour une presse à balles (16) ou une enrubanneuse (10), le dispositif de basculement de déchargement (42) comprenant un premier élément d'appui (45), avec lequel le dispositif de basculement de déchargement (44) prend appui sur le sol, et un deuxième élément d'appui (46), une traverse (64), une entretoise longitudinale (42) et une entretoise diagonale (48), et l'entretoise longitudinale (44) et l'entretoise diagonale (46) étant reliées chacune par une extrémité à la traverse (64), **caractérisé en ce que** le dispositif de basculement de déchargement (42) comprend une plaque porteuse (54), le premier élément d'appui (45) étant relié à la plaque porteuse (54), et l'entretoise longitudinale (44) et l'entretoise diagonale (46) étant reliées chacune par l'autre extrémité à la plaque porteuse (54), et le premier et le deuxième élément d'appui (45, 48) étant formés comme une roue.

2. Dispositif de basculement de déchargement selon la revendication 1, **caractérisé en ce que** le dispositif de basculement de déchargement (42) comprend un écarteur (55).

3. Dispositif de basculement de déchargement selon la revendication 1 ou 2, **caractérisé en ce que** le deuxième élément d'appui (48) est relié à la plaque porteuse (54) ou le premier et le deuxième élément d'appui (45, 48) sont reliés à la plaque porteuse (54).

4. Dispositif de basculement de déchargement selon l'une des revendications 1 à 3, **caractérisé en ce que** l'écarteur (55) est relié à la plaque porteuse (54).

5. Dispositif de basculement de déchargement selon l'une des revendications précédentes 1 à 4, **caractérisé en ce que** l'écarteur (55) est relié au premier et/ou au deuxième élément d'appui (45, 48).

6. Dispositif de basculement de déchargement selon l'une des revendications précédentes 1 à 5, **caractérisé en ce que** l'écarteur (55) comprend un patin et/ou une glissière, en particulier est formé comme un patin ou une glissière.

7. Dispositif de basculement de déchargement selon l'une des revendications précédentes 1 à 6, **caractérisé en ce que** l'écarteur (55) comprend un élément d'écartement (74).

8. Dispositif de basculement de déchargement selon l'une des revendications précédentes 1 à 7, **caractérisé en ce que** l'écarteur (55) comprend un premier et un deuxième support (70, 72).

9. Dispositif de basculement de déchargement selon la revendication 8, **caractérisé en ce qu'**une première extrémité de l'élément d'écartement (74) est reliée au premier support (70) et une seconde extrémité de l'élément d'écartement (74) est reliée au deuxième support (72).

10. Dispositif de basculement de déchargement selon l'une des revendications précédentes 7 à 9, **caractérisé en ce qu'**un patin d'écartement (76) est relié à l'élément d'écartement (74).

11. Dispositif de basculement de déchargement selon l'une des revendications précédentes 7 à 10, **caractérisé en ce que** l'élément d'écartement (74) est formé comme un patin (78) ou une glissière.

12. Presse à balles ou enrubanneuse avec un dispositif de basculement de déchargement (42) selon l'une des revendications 1 à 11.

13. Presse à balles ou enrubanneuse selon la revendication 12, **caractérisée en ce que** le dispositif de basculement de déchargement (42) est relié à la presse à balles (16) ou à l'enrubanneuse (10) de manière à pouvoir pivoter autour d'un axe (56) s'étendant transversalement à une direction d'avancement (V).

14. Presse à balles ou enrubanneuse selon la revendication 12 ou 13, **caractérisée en ce que** la presse à balles (16) ou l'enrubanneuse (10) sont configurées de telle sorte que la balle ronde (20, 22') roule depuis une chambre de pressage (17) de la presse à balles (16) ou depuis un dispositif pivotant (24) de l'enrubanneuse (10) au dispositif de basculement de déchargement (42).
